# EUROPEAN PATENT APPLICATION

(11) **EP 1 941 793 A1**
(43) Date of publication of application: **09.07.2008**
(21) Application number: 08100101.8
(22) Date of filing: 04.01.2008
(51) Int. Cl.: A01G 9/08

(54) **Apparatus and method for the receiving/delivering of crop holders**

(30) Priority: 05.01.2007 NL 2000417
(71) Applicant: Rijnplant B.V., 2678 NC De Lier (NL)
(72) Inventor: Van Rijn, Cornelis Adrianus, 2678 NC, De Lier (NL); Diepeveen, Huibertus, 6679 GE, Oosterhout (NL); Van Horssen, Frederik Pius, 2675 BP, Honselersdijk (NL)
(74) Representative: van Westenbrugge, Andries

(57) **Abstract**

Apparatus and method for the receiving/delivering of pot plants. For the receiving of pot plants from a floor, it is proposed to utilize a fork-like construction wherein each fork is provided with conveying means. These conveying means consist of one or two worms which protrude slightly beyond the free end of carriers carrying the conveying means and are configured so as to taper, for example conically, toward the end. This allows rows of pot plants to be received in a secure manner. Attaching preferably two worms, one above the other, positions the pot plants in a particularly stable manner, as a result of which crops having a high centre of gravity can easily be received without the risk of falling over. The apparatus allows the crops to be positioned next to one another or moved closer together during delivery. Preferably, the apparatus is displaceable, as a result of which, after the receiving of preferably a number of parallel rows of pot plants, the pot plants can be displaced for further treatment. Obviously, it is also possible to deliver crops in this way to, for example, a cultivation surface.

## Description

The present invention relates to an apparatus for the receiving of stationary crop holders, comprising two substantially parallel arms which are fastened to a common carrier and between which a space is delimited for the receiving of a row of crop holders, wherein one of said arms comprises conveying means for the receiving and moving of said crop holders between two arms, which apparatus is configured so as to be displaceable.

An apparatus of this type is known from NL 9402104 and PCT/NL 02/00818. Both publications describe fork-like constructions wherein a row of pot plants can be received between the fork teeth or arms. In both cases, the conveying means consist of conveyor belts allowing displacement with respect to the arms. It is thus possible, by controlling the conveyor belts or cords, to move rows of pot plants standing on a cultivation base without mutual movement of the belt/chord with respect to the pot plants in the rows. Receiving and conveyance can thus be guaranteed. The conveyor belts or cords are inserted further and further into the rows of, for example, pot plants standing on the floor of a greenhouse for the receiving thereof.

However, it has been found that the greatest problems in the receiving and delivering of crops or crop holders or pot plants occur during the initial receiving thereof. Often, pots do not stand in a neat line and the distance between the pots varies. This immediately creates the risk of falling over when the plants are received for the first time. Falling over immediately gives rise to malfunctioning, thus nullifying the mechanisation obtained with the apparatuses described hereinbefore and even causing additional damage to the pot plants or other cultivated crops.

GB-A-1 356 418 discloses a worm conveyor which is stationarily attached in a machine and is configured for the displacing of bottles and the like.

The object of the present invention is to avoid this drawback from the prior art and to provide an improved construction providing positive support for pot plants when they are first received.

In the case of an above-described apparatus, this object is achieved in that said conveying means comprise worms having a longitudinal axis substantially parallel to said arms.

As a result of the use of worms, screwing can provide longitudinal conveyance, i.e. conveyance parallel to the longitudinal extension of the arms. However, in contrast to constructions according to the prior art, the presence of worms provides also lateral support, i.e. there is no risk of the crops falling over. This provides particularly stable conveyance of pot plants during receiving. A worm may be provided on one side of the pot plant, whereas on the other side support is provided in a different manner. Preferably, worms are provided on both sides. Obviously, this apparatus can also be utilized for the redelivering of pot plants to, for example, a cultivation surface such as an ebb and flow base in a greenhouse, a roller table or the like. For this purpose, the apparatus according to the present invention, and more specifically the carrier thereof, is preferably configured so as to be displaceable. This displaceability can be provided in any manner conceivable in the prior art. It is possible to configure the apparatus as an auxiliary fork which can be coupled to an existing forklift truck. It is also possible to integrate the carrier into a self-propelled construction which may or may not be operated remotely and moves automatically through a cultivation space such as a greenhouse. For other applications, the apparatus may be attached stationarily, such as in the central treatment of crops.

Preferably, the speed of conveyance of the worms at the receiving end of the crop holders will be at least as high as the speed of displacement of the apparatus to which the worms are attached.

According to one particular embodiment of the invention, the distance between two worms between which a pot plant or other crop holder has to be received is greater in proximity to the receiving end, i.e. the free end thereof set apart from the carrier, than at the end in proximity to said carrier. This provides a type of V-shaped entrance for crop holders. This may be achieved, in particular, by configuring the free end of the worms so as to taper conically. This is made possible by reducing the size in a certain direction of either the crest of the worm or the core or both.

A further particular variation of the invention provides two worms positioned one above the other. The worms may be attached one immediately below the other or staggered to a certain extent, possibly with differing diameters, but in all cases efforts are made to position the worms in such a way as to provide a pot with optimum support during receiving and to eliminate as far as possible the risk of falling over when the pot is first received.

Preferably, the worms and arms respectively are configured in such a way that each worm is effective on two sides, i.e. can be used, in plan view both to the left and to the right thereof, to displace a pot plant. A comparatively limited number of worms are thus sufficient.

If two worms are used, the worms can be effective in the same direction and this is preferably achieved by imparting to the worms the same direction of turning and rotating them in the same direction. In addition, the worms may each be provided with more than one helix, wherein the helices are preferably set apart from one another not at a uniform distance. This provides a variable mutual distance between adjacent pots.

A further advantageous embodiment provides a carrying plate on which the pot plant can be placed as soon as it has been received between the worms and over which the pot plant is slid.

In addition, it is possible in the case of relatively long arms to provide this carrier plate with a central slotted opening containing further conveying means such as a further worm. After all, once the pot plant has been received by the apparatus, the risk of toppling is greatly reduced. This risk can be further reduced by allowing the carrier plate to pass into a carrying trough containing the above-described slot with further conveying means.

According to a further embodiment of the invention, the carrying plate ends at a distance from at least one of the worms. This allows such worms to extend further on a cultivation base or the like for the receiving of the crops.

According to a further advantageous embodiment of the invention, the worm or worms is/are configured in such a way that the speed of movement of the crop holders engaged thereby varies. In other words, the pitch of the worm or worms varies over the length thereof. More specifically, for example during receiving, the various elements are configured in such a way that at the receiving end the speed of movement/pitch of the worms is such that it corresponds to the speed of movement of the moving machine but increases further downstream from the point of reception of the worm, i.e. the speed of displacement of the received crops or crop holders respectively increases toward the interior of the machine.

The invention also relates to a method for the use of the above-described apparatus. In addition, the invention relates to a method for the delivering of a row of pot plants which are substantially parallel in one direction, including the receiving of parallel rows of pot plants between parallel rows of worms, which worms are attached to a displaceable carrier and are rotatable for the displacing of said pot plants therebetween, wherein said worms are rotated for the delivering of said pot plants, said carrier moving at a speed of displacement which differs from the speed of movement of said pot plants enforced by said worms.

This method allows pot plants to be moved apart or, conversely, brought closer together during delivery. In other words, the present invention allows crops to be received and then moved apart from one another on a different cultivation plane or the same cultivation plane. Instead of a cultivation plane, use may be made of any other surface for this purpose, for example in a treatment space or a further conveying means.

It is also possible to use the above-described apparatus for the filling or emptying of a truck which moves crops between two positions. Such conveyance can be carried out within a single operation but also between two different operations. A truck of this type can be configured in such a way that the crops are attached at different levels therein.

The invention can be applied to all types of crop holders such as the pots, trays and the like referred to the in the present document.

The invention will be described with reference to the exemplary embodiments illustrated in the drawings, in which:

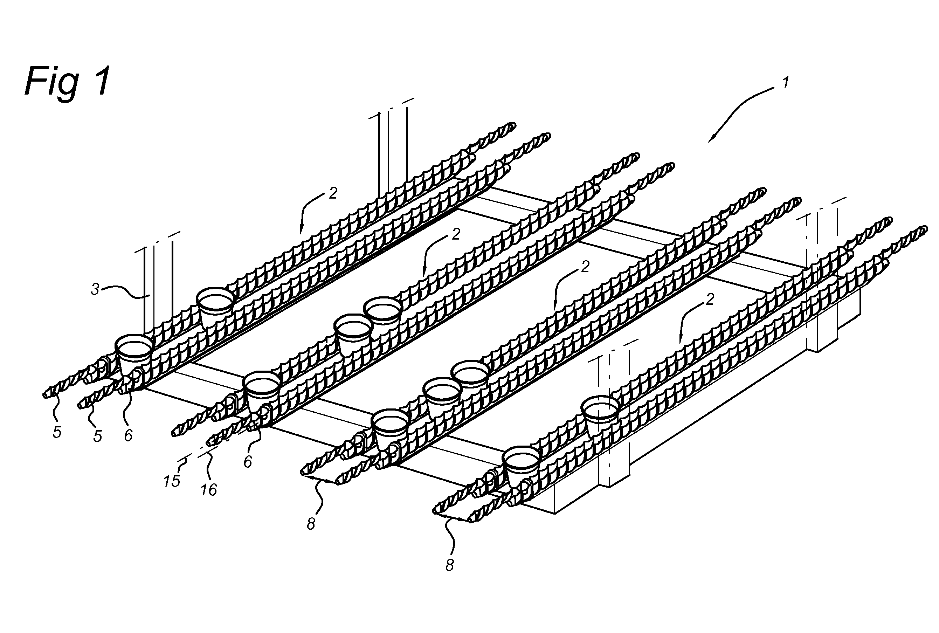

Fig. 1 is a perspective view of a portion of a carrier provided with the arms according to the invention;
Fig. 2 shows the construction of the worms in proximity to the carrier;
Fig. 3 shows the portion of the portion of the construction of the worms in the carrier that connects to Fig. 1 and 2; and
Fig. 4 shows the free end of the apparatus according to the invention during the receiving/delivering of crops.

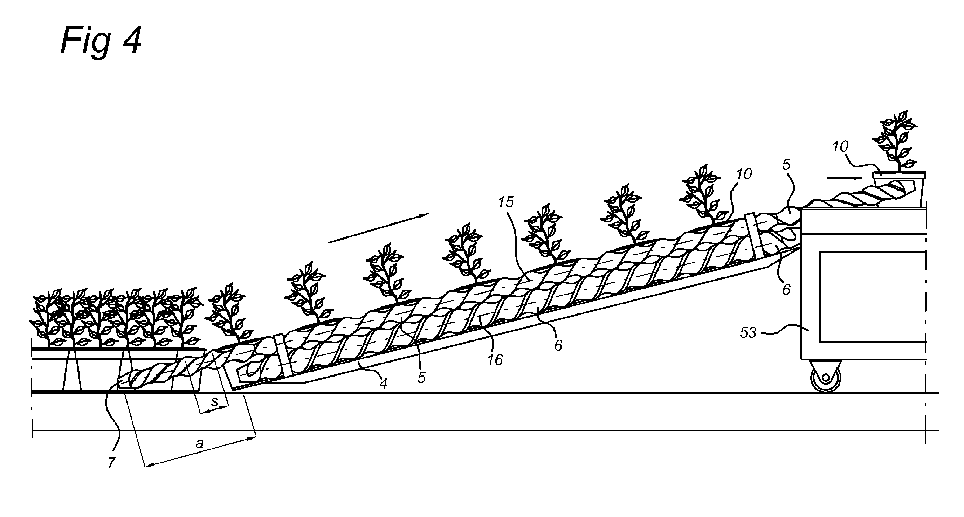

In the drawings, reference numeral 1 denotes the apparatus according to the present invention. The apparatus consists of a carrier 3 to which a number of parallel arms 2 are attached. The carrier 3 can comprise any conceivable, preferably displaceable, construction from the prior art such as a self-propelled carriage, forklift truck and the like. Each arm 2 is preferably provided with two worms 5, 6 positioned one above the other. These worms are rotatable about longitudinal axes 15, 16 respectively. In the exemplary embodiments shown in the present document, the worms have a constant pitch over the length thereof. It is possible to vary this pitch in order thus to vary the speed of the pot plants engaged thereby accordingly. A free space 8 for the receiving of pot plants 10 is delimited between opposing worms. A carrying plate or carrying trough 4 is located below the worms 5, 6. Fig. 4 reveals that the carrier plate or carrier trough extends less far than the top worm 5 of the pair of worms 5, 6. The pitch of the worm being denoted by s, Fig. 4 reveals that the distance a over which the worm 5 extends outside the carrying plate 4 is at least three times this pitch s.

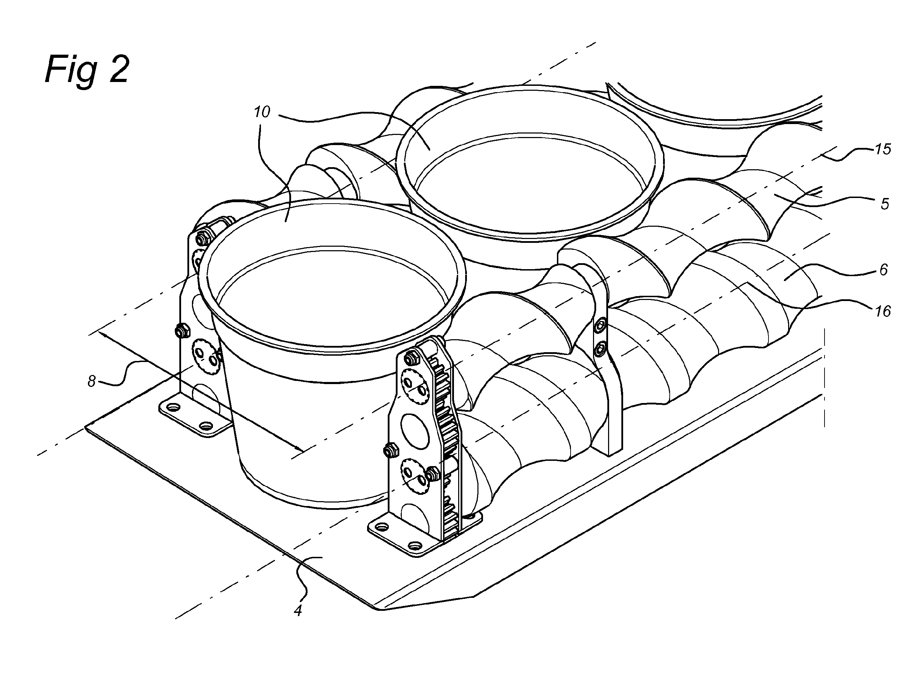

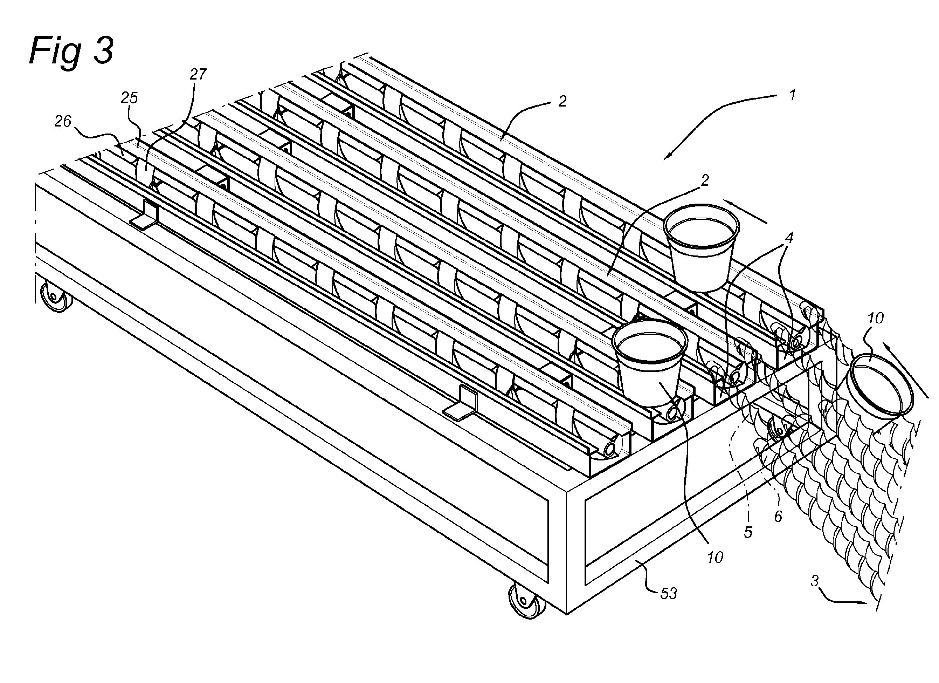

The construction 53 shown in Fig. 3 can connect to that shown in Fig. 2. The two worms laterally bordering the pot plants are no longer necessary and the undersides of the pot plants rest in profile members 25. Located between two opposing profile members 25 is always a slot 26 in which there is attached a further worm 27 which screws the pot plants in the desired direction of movement as a result of engagement with the base thereof.

The above-described apparatus operates as follows. If a large number of pot plants are located on a cultivation plane and have to be displaced, the apparatus according to the present invention approaches the outermost row of pot plants. As a result of the conically tapering ends 7, the worms 5 will protrude in all cases between two pots. Immediately imposing, from the moment the apparatus enters into contact with the pot plants, a rotating motion on the worms 5, 6 allows the apparatus to move further between the rows of pot plants. Therein it is possible to allow the apparatus to move more quickly than, at the same speed as or more slowly than the speed of movement enforced by the worms 5, 6. Preferably, the same speed is utilized during receiving, so the pots are substantially not displaced when the apparatus approaches them for the first time and the worms are placed between the pots. Subsequently, the carrying plate 4 reaches the pots, thus presenting a first obstacle to the pots. However, in this position, each pot is secured stably between two opposing worms. As soon as a first movement has been carried out on the carrying plate 4, the worms 6 provide further support to the pots. In the illustrated exemplary embodiment, the worm 6 has a larger diameter than the worm 5. However, it will be understood that the overall speed of displacement along the axis 16 is identical to a speed of displacement along the axis 15. This may be achieved by differing rotational speeds or the use of the same pitch. Fig. 2 shows a transmission mechanism for the worms. The worms can be driven electrically, hydraulically, pneumatically or in any other manner conceivable in the prior art.

Both the carrier 3 and the construction 53 can serve as a conveyor and/or buffer for pot plants and be used both in combination and independently.

Although the invention has been described hereinbefore with reference to a preferred embodiment, it will be understood that a large number of modifications may be made thereto without departing from the scope of the present application.

## Claims

1. Apparatus (1) for the receiving of stationary crop holders (10), comprising two substantially parallel arms (2) which are fastened to a common carrier (3) and between which a space (8) is delimited for the receiving of a row of crop holders (10), wherein one of said arms comprises conveying means (5, 6) for the receiving and moving of said crop holders between two arms, said apparatus being configured so as to be displaceable, **characterized in that** said conveying means comprise worms (5, 6) having a longitudinal axis (15, 16) substantially parallel to said arms.

2. Apparatus according to Claim 1, wherein each of said arms comprises conveying means.

3. Apparatus according to Claim 1, wherein the distance between two remote worms (5, 6) between the outer boundary of said worms is larger at the free end (7) set apart from said carrier than at the end in proximity to said carrier.

4. Apparatus according to any one of the preceding claims, wherein the free end (7) of said worms is configured so as to taper conically.

5. Apparatus according to any one of the preceding claims, wherein each arm is provided with two worms (5, 6).

6. Apparatus according to Claim 4, wherein said worms are, in the use position, attached horizontally one above the other.

7. Apparatus according to either Claim 4 or Claim 5, wherein said worms are configured so as to be able to rotate in the same direction.

8. Apparatus according to any one of the preceding claims, wherein a worm on an arm is able to engage plant holders on either side thereof.

9. Apparatus according to any one of the preceding claims, wherein said apparatus comprises a carrying plate (4) extending below said conveying means.

10. Apparatus according to Claim 8, wherein said carrying plate ends at a distance (a) from the free ends (7) set apart from the carrier.

11. Apparatus according to Claim 16, wherein said distance (a) is greater than three times the pitch (s) of said worm (5).

12. Method for the delivering of parallel rows of pot plants (10), including the receiving of parallel rows of pot plants between parallel rows of worms, said worms being attached to a displaceable carrier and are rotatable for the displacing of said pot plants therebetween, wherein said worms are rotated for the delivering of said pot plants, said carrier moving at a speed of displacement which differs from the speed of movement of said pot plants enforced by said worms.
